# EUROPÄISCHE PATENTSCHRIFT

(11) **EP 2 655 676 B1**
(45) Veröffentlichungstag und Bekanntmachung des Hinweises auf die Patenterteilung: **22.03.2017**
(21) Anmeldenummer: 11794439.7
(22) Anmeldetag: 28.11.2011
(51) Int. Cl.: C21D 9/00, C23C 8/80, F16B 35/00, C23C 8/22, C23C 8/26, C23C 8/04

(54) **SCHRAUBE AUS NIEDRIG LEGIERTEM KOHLENSTOFFSTAHL UND VERFAHREN ZUR HERSTELLUNG EINER DERARTIGEN SCHRAUBE**
SCREW MADE OF LOW-ALLOY CARBON STEEL, AND METHOD FOR PRODUCING SUCH A SCREW
VIS EN ACIER AU CARBONE FAIBLEMENT ALLIÉ ET PROCÉDÉ DE FABRICATION D'UNE TELLE VIS

(30) Priorität: 20.12.2010 DE 102010055210
(43) Veröffentlichungstag der Anmeldung: 30.10.2013
(73) Patentinhaber: EJOT GmbH & Co. KG, 57319 Bad Berleburg (DE)
(72) Erfinder: PINZL, Wilfried, 99897 Tambach-Dietharz (DE)
(74) Vertreter: Puschmann Borchert Bardehle Patentanwälte Partnerschaft mbB
(86) Internationale Anmeldenummer: PCT/EP2011/071153
(87) Internationale Veröffentlichungsnummer: WO 2012/084413

(56) Entgegenhaltungen:
- EP-A1- 1 466 990
- WO-A1-03/046229
- DE-A1- 2 831 439
- US-A- 4 664 722

## Beschreibung

Die Erfindung bezieht sich auf eine Schraube mit einem Kopf, einem anschließendem Halteabschnitt und einer Funktionsspitze, die gegenüber dem Halteabschnitt eine größere Härte aufweist und aus einem niedrig legierten, gehärteten Kohlenstoffstahl besteht.

Aus der WO 03/046229 A1 ist ein Verfahren zur Herstellung einer Schraube aus niedrig legiertem Kohlenstoffstahl bekannt. Gemäß einem Ausführungsbeispiel wird die Schraube zunächst gehärtet, wobei die Funktionsspitze während des Erwärmens aufgekohlt- bzw. carbonitriert wird. Anschließend wird nur der sich außerhalb der Funktionsspitze befindliche Teil der Schraube angelassen.

Aus der EP 1 466 990 A1 ist eine aus einem niedrig legierten Kohlenstoffstahl bestehende Schraube mit einer partiell gehärteten Funktionsspitze und ein Verfahren zu ihrer Herstellung bekannt. Das bekannte Verfahren läuft derart ab, dass die Härtung durch momentanes Erwärmen bei hohem Energietransfer und anschließendem Abschrecken erfolgt sowie auf Teilbereiche des Umfang der Funktionsspitze beschränkt wird. Diese Härtung kann sowohl bei vergüteten als auch komplett einsatzvergüteten Schrauben durchgeführt werden.

Die Erfahrung hat gezeigt, dass es beim Eindrehen einer derart hergestellten Schraube in ein aus einem hochfesten Material bestehendes Mutterstück dazu kommt, dass die Schraube wegen mangelnder Härte (vergütet) oder zu großer Sprödigkeit (einsatzvergütet) sich nicht in das Mutterstück prozesssicher einschrauben lässt, so dass die Aufgabe besteht, derartige Schrauben hinsichtlich ihrer Festigkeitseigenschaften zu verbessern. Dies geschieht durch ein Verfahren gemäß Anspruch 1.

Das Verfahren zur Herstellung dieser Schraube verläuft derart, dass die Schraube über ihren Kopf und ihren Halteabschnitt mit einer als Diffusionssperre wirkenden Isolationsschicht versehen und in einer mit Kohlenstoff und/oder Stickstoff angereichten Atmosphäre nach einer Erwärmung auf eine Temperatur über der Austenitisierungstemperatur ausgesetzt wird und dabei eine auf die Funktionsspitze beschränkte Anreicherung erhält, wonach die Schraube abgeschreckt und angelassen und dabei einer Härtung ausgesetzt wird, die aufgrund der Isolationsschicht höher ist im Bereich der Funktionsspitze als im Bereich von Kopf und Halteabschnitt.

Aufgrund der Verwendung einer Isolationsschicht am Kopf- und Halterabschnitt ergibt sich die Möglichkeit, durch besondere Maßnahmen den frei gelassenen Bereich der Schraube einer Behandlung zu unterziehen, die diesen Bereich besonders aushärten kann. Es handelt sich dabei um jenen Bereich, der beim Eindrehen einer solchen Schraube in ein Mutterstück einer besonders hohen Belastung ausgesetzt ist, was bei den bekannten Schrauben häufig dazu führt, dass die Schraube abbricht, so dass damit eine gewünschte Verschraubung unmöglich wird. Der von der Isolationsschicht bedeckten Bereich erfährt dabei nur eine konventionelle Vergütung.

Die Härte der Funktionsspitze wird nach dem Anlassen durch eine Kurzzeiterwärmung, gefolgt von einem Abschreckvorgang, weiter gesteigert. Diese Kurzzeiterwärmung kann auf verschiedene Weise erfolgen, nämlich durch Induktion, einen Elektronenstrahl oder auch zum Beispiel durch einen Laserstrahl.

Die betreffende Schraube erhält damit eine Funktionsspitze, die aufgrund ihres erhöhten Kohlenstoff- und/oder Stickstoffanteils ganz besonders härtbar ist und somit auch hohen Belastungen auch ohne weiteres standhalten kann.

In den Figuren ist ein Ausführungsbeispiel dargestellt. Es zeigen
- Fig. 1: die ungehärtete Schraube in ihrer äußerlichen Gestaltung;
- Fig. 2: die gleiche Schraube mit einer Isolationsschicht (Diffusionssperre), reichend vom Kopf der Schraube bis zu Beginn des Bereichs mit der Funktionsspitze;
- Fig. 3: die gleiche Schraube mit einer auf die Funktionsspitze beschränkten Anreicherung mit Kohlenstoff und/oder Stickstoff;
- Fig. 4: die gleiche gehärtete Schraube;
- Fig. 5: die gleiche Schraube wie in Figur 4 dargestellt, mit zusätzlich gehärteter Funktionsspitze;

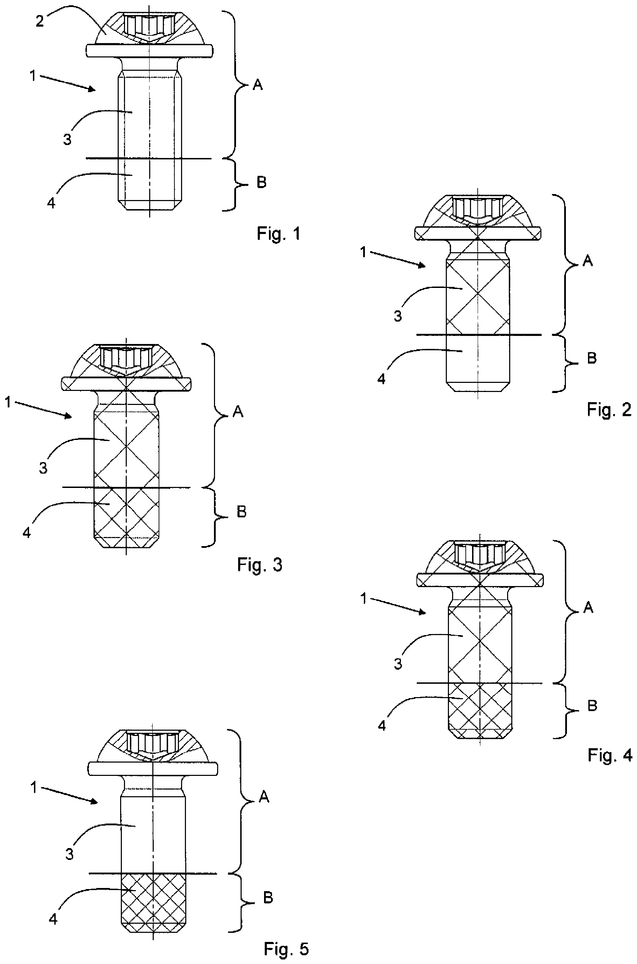

In der Figur 1 ist als Ausführungsbeispiel eine ungehärtete Schraube 1 mit dem Schraubenkopf 2 und dem Halteabschnitt 3 (Bereich A) wiedergegeben, ohne dass in die Figur 1 ein besonderes Gewinde eingezeichnet ist, das beliebiger Art sein kann, z.B. eingängig oder mehrgängig, worauf es in diesem Zusammenhang nicht ankommt. An den Halteabschnitt 3 schließt sich die Funktionsspitze 4 (Bereich B) an, in die das Gewinde aus dem Halterabschnitt 3 stufenlos übergeht.

Im Verlauf des Verfahrens zur Herstellung der Schraube mit einer besonderen Härtung nur im Bereich der Funktionsspitze 4 wird die Schraube 1 mit einer Diffusionssperre (Isolationsschicht) versehen. Diese Gestaltung ist in der Figur 2 dadurch dargestellt, dass der Bereich A mit einer weiten Kreuzschraffur versehen ist, die die Diffusionssperre anzeigt.

Es wird dann die Schraube einer Temperatur über der Austenitisierungstemperatur ausgesetzt, wobei dieser Vorgang in einer mit Kohlenstoff und/oder Stickstoff angereicherten Atmosphäre vor sich geht, so dass nur die Funktionsspitze (Bereich B) oberflächlich mit einer Eindringtiefe mit Kohlenstoff und/oder Stickstoff angereichert wird. Diese Anreicherung beschränkt sich aufgrund der vorher aufgebrachten Isolationsschicht nur auf die Funktionsspitze 4 bzw. den Bereich B mit Kreuzschraffur in Figur 3.

In der Figur 4 ist die gleiche Schraube wiedergegeben, allerdings wurde die Schraube nunmehr einer Härtung ausgesetzt, die sie aufgrund der Anreicherung von Kohlenstoff und/oder Stickstoff in der Funktionsspitze bzw. den Bereich B (enge Kreuzschraffur) stärker härtet, da der Bereich A von einer Aufkohlung bzw. Anreicherung von Stickstoff freigehalten ist.

Figur 5 zeigt die im Bereich der Funktionsspitze zusätzlich gehärtete Schraube 1, bei der die Diffusionssperre mit Rücksicht auf die spätere Verwendung der Schraube entfernt ist und die einem Härtevorgang ausgesetzt wurde, der sich hinsichtlich Härtung des Materials nur auf die Funktionsspitze 4 (Bereich B) erstreckt (z. B. durch Induktion, Elektronenstrahl oder Laserstrahl). Der übrige Bereich A bleibt damit von dieser Behandlung frei. Die in Fig. 5 dargestellte Schraube zeigt, dass sie eine besonders harte Funktionsspitze (4) aufweist (siehe dichte Kreuzschraffur im Bereich B), womit, wie gewünscht, eine Schraube geschaffen ist, die lediglich im Bereich der Funktionsspitze eine besonders erhöhte Härte für ihre weitere Verwendung als selbstfurchende Schraube aufweist.

## Patentansprüche

1. Verfahren zur Herstellung einer Schraube mit einem Kopf, einem anschließendem Halteabschnitt und einer Funktionsspitze, die gegenüber dem Halteabschnitt eine größere Härte aufweist und aus einem niedrig legierten, gehärteten Kohlenstoffstahl besteht, wobei die Schraube einer mit Kohlenstoff und/oder Stickstoff angereichten Atmosphäre nach einer Erwärmung auf eine Temperatur über der Austenitisierungstemperatur ausgesetzt wird und dabei eine auf die Funktionsspitze beschränkte Anreicherung von Kohlenstoff oder Stickstoff erhält, wonach die Schraube abgeschreckt und angelassen und dabei einer Härtung ausgesetzt wird, wobei die Schraube über ihren Kopf und ihren Halteabschnitt mit einer als Diffusionssperre wirkenden Isolationsschicht versehen wird, und die Funktionsspitze nach dem Anlassen einer Kurzzeiterwärmung zur Erhöhung ihrer Härte ausgesetzt wird, wobei die Funktionsspitze aufgrund der Isolationsschicht gegenüber dem Halteabschnitt einen erhöhten Kohlenstoff- und/oder Stickstoffanteil aufweist.

2. Verfahren nach Anspruch 1, **dadurch gekennzeichnet, dass** die Erhitzung durch Induktion erfolgt.

3. Verfahren nach Anspruch 1, **dadurch gekennzeichnet, dass** die Erhitzung durch Elektronenstrahl erfolgt.

4. Verfahren nach Anspruch 1, **dadurch gekennzeichnet, dass** die Erhitzung durch Laserstrahl erfolgt.

5. Schraube, **dadurch gekennzeichnet, dass** sie nach einem Verfahren gemäß einem der vorhergehenden Verfahrensansprüche hergestellt ist.

## Claims

1. A method for producing a screw having a head, an adjoining retaining section and a functional tip which is of greater hardness than the retaining section and is made of low-alloy hardened carbon steel, which screw is exposed to a carbon- and/or nitrogen-enriched atmosphere following heating to a temperature above the austenitizing temperature and thus undergoes carbon or nitrogen enrichment that is limited to its functional tip, after which the screw is quenched and tempered and thus hardened, wherein the screw is provided with an insulating layer that extends all over its head and its retaining section and acts as a diffusion barrier, and the functional tip undergoes brief heating after tempering so as to increase its hardness, which functional tip has an increased carbon and/or nitrogen content compared to the retaining section, owing to the insulating layer.

2. The method according to claim 1 **characterized in that** said heating is performed by way of induction.

3. The method according to claim 1 **characterized in that** said heating is performed by means of an electron beam.

4. The method according to claim 1 **characterized in that** said heating is performed by means of a laser beam.

5. A screw **characterized in that** it is produced according to a method as claimed in one of the preceding method claims.

## Revendications

1. Procédé de fabrication d'une vis pourvue d'une tête, d'un segment de retenue adjacent et d'une pointe fonctionnelle présentant une dureté supérieure à celle du segment de retenue, et constituée d'un acier au carbone trempé faiblement allié, dans lequel la vis est soumise à une atmosphère enrichie de carbone et/ou d'azote après chauffage à une température supérieure à la température d'austénitisation, et subissant en l'occurrence un enrichissement en carbone ou azote restreint à la pointe fonctionnelle, ce après quoi la vis est refroidie brusquement et recuite et alors soumise à une trempe,
dans lequel la vis est pourvue sur sa tête et son segment de retenue d'une couche isolante agissant comme barrière de diffusion, et la pointe fonctionnelle est soumise après recuit à un chauffage de courte durée destiné à accroître sa dureté, dans lequel la pointe fonctionnelle contient une proportion de carbone et/ou d'azote plus élevée que le segment de retenue du fait de la couche isolante.

2. Procédé selon la revendication 1, **caractérisé en ce que** le chauffage est effectué par induction.

3. Procédé selon la revendication 1, **caractérisé en ce que** le chauffage est effectué par irradiation d'électrons.

4. Procédé selon la revendication 1, **caractérisé en ce que** le chauffage est effectué par rayonnement laser.

5. Vis, **caractérisée en ce qu'**elle est fabriquée conformément à un procédé selon l'une des revendications de procédé précédentes.
